# FASCICULE DE BREVET EUROPEEN

(11) **EP 3 380 675 B1**
(45) Date de publication et mention de la délivrance du brevet: **08.01.2020**
(21) Numéro de dépôt: 16809960.4
(22) Date de dépôt: 03.11.2016
(51) Int. Cl.: E01H 1/08

(54) **SOUFFLEUR ÉLECTROPORTATIF À COUPLE DE RÉACTION RÉDUIT**
TRAGBARER ELEKTRISCHER BLÄSER MIT NIEDRIGREAKTIONSDREHMOMENT
PORTABLE ELECTRIC BLOWER WITH LOW REACTION TORQUE

(30) Priorité: 25.11.2015 FR 1561341
(43) Date de publication de la demande: 03.10.2018
(73) Titulaire: PELLENC, 84120 Pertuis (FR)
(72) Inventeur: PELLENC, Roger, 84120 Pertuis (FR)
(74) Mandataire: Weber, Etienne Nicolas
(86) Numéro de dépôt international: PCT/FR2016/052842
(87) Numéro de publication internationale: WO 2017/089671

(56) Documents cités:
- WO-A1-2014/030755
- WO-A1-2015/139723
- FR-A1- 2 964 987

## Description

### Domaine technique

La présente invention concerne un souffleur et en particulier un souffleur électroportatif à couple de réaction réduit.
On entend par souffleur un appareil de projection d'air utilisé pour balayer des feuilles mortes ou des détritus pouvant joncher des surfaces telles que des pelouses, des aires de jeu, des parkings, ou des voies publiques.

Un tel appareil est utilisé notamment pour repousser les feuilles mortes ou les détritus de manière à en former des amas qui peuvent être plus facilement collectés et éliminés. Dans son usage, le souffleur peut remplacer un râteau ou un balai. Il autorise toutefois des rendements de travail plus élevés avec une pénibilité moindre.

L'invention peut trouver des applications pour des souffleurs à moteur thermique ou des souffleurs à moteur électrique. Elle vise en particulier des souffleurs électroportatifs autonomes et légers susceptibles d'être portés et manœuvrés à une main.

Les souffleurs électroportatifs de ce type peuvent être dotés de préférence d'une alimentation électrique à batterie, avec une batterie intégrée ou déportée. On entend par batterie déportée une batterie portée au dos ou à la ceinture et reliée au souffleur par un cordon d'alimentation.

### Etat de la technique antérieure

Le document US 8 894 382 décrit un souffleur électroportatif connu du type à batterie intégrée.
Un tel souffleur comprend un ventilateur axial de soufflage logé dans un carter et utilisé pour accélérer un flux d'air. L'air est aspiré par une tuyère d'aspiration connectée en amont du ventilateur et rejeté par une buse de soufflage connectée en aval du ventilateur. Le ventilateur et la buse de soufflage permettent de conférer au flux d'air sortant une vitesse élevée et une direction homogène.

La direction du flux d'air sortant est déterminée par la buse de soufflage. Celle-ci est sensiblement alignée sur l'axe du ventilateur axial de soufflage de manière à optimiser le rendement de soufflage et limiter les pertes de charge.

Une poignée de portage et de manœuvre du souffleur est ménagée sur la partie supérieure du souffleur pris dans sa position d'utilisation. La poignée est agencée de manière à coïncider avec un point d'équilibre du souffleur de manière que les masses du souffleur soient réparties de manière sensiblement uniforme à l'avant et à l'arrière de la poignée. Cette mesure permet d'éviter d'exercer sur la main de l'utilisateur un couple de torsion important vers l'avant ou vers l'arrière lorsqu'il porte le souffleur, ce dernier étant à l'arrêt.

Par ailleurs, une certaine inclinaison de la poignée par rapport à l'axe de ventilateur permet d'ajuster une position de confort de la main tenant la poignée lorsque la buse de soufflage présente avec le sol un angle de soufflage prédéterminé.

Dans les souffleurs de ce type, la poignée de portage et de manœuvre est située au-dessus de l'axe de ventilateur et à une certaine distance de cet axe. Or, lorsque le souffleur est en fonctionnement, la force de poussée du flux d'air sortant de la buse de soufflage génère une force de réaction dans l'axe de la force de poussée mais dans le sens opposé à cette dernière. Dans le cas du document US 8 894 382 ces forces sont également alignées avec l'axe de ventilateur. Ainsi, et en raison de la distance qui sépare la poignée de l'axe de ventilateur, la force de réaction au jet d'air crée un couple de réaction sur la poignée et donc sur la main de l'utilisateur tenant cette poignée.

A la force de réaction due au flux d'air sortant s'ajoute une force de réaction au flux d'air entrant aspiré par la tuyère d'admission. Or, comme la tuyère d'admission est généralement alignée sur l'axe de ventilateur, la force de réaction au flux d'air sortant est également orientée sensiblement selon cet axe et vient augmenter encore le couple de torsion s'exerçant sur la main de l'utilisateur lorsque le souffleur est en fonctionnement. En effet, relativement au flux d'air, la tuyère d'admission et la buse de soufflage sont opposées par rapport au ventilateur de soufflage. Ainsi, dans ces conditions, les forces de réaction sont alignées et s'additionnent en raison du fait que le mouvement de l'air est entrant au niveau de la tuyère d'admission et sortant au niveau de la buse de soufflage.

Il n'est pas possible de compenser le couple de torsion généré en réaction au flux d'air du souffleur simplement par une répartition différente des masses du souffleur ou un déplacement de la poignée par rapport au point d'équilibre. En effet la force de réaction du flux d'air qui génère un couple de torsion au niveau de la poignée n'est pas constante lorsque le souffleur est en cours d'utilisation. Elle peut varier d'une valeur nulle lorsque le moteur du souffleur est à l'arrêt à une valeur maximale lorsque le souffleur est sollicité à sa pleine puissance. Or, il n'est pas possible de corriger de façon dynamique la répartition des masses ou le positionnement de la poignée en fonction de la force de réaction du flux d'air pour compenser le couple de torsion généré par cette force.

Les souffleurs du type décrit présentent généralement un interrupteur ou une gâchette permettant d'actionner, de façon continue ou de façon modulée asservie à la position de la gâchette, le moteur électrique d'entraînement du ventilateur de soufflage. Ceci permet de faire varier de façon continue ou modulée la vitesse du flux d'air. Le fonctionnement discontinu ou les variations de régime établissent ou annulent, ou modifient constamment le couple de torsion généré en réaction du flux d'air et exercé sur la main de l'utilisateur.

Or, l'utilisation du souffleur nécessite d'orienter et de positionner en permanence de façon précise le flux d'air du souffleur, obligeant la main de l'utilisateur à compenser tous les efforts tendant à contrarier cette orientation et cette position. Le couple de torsion exercé sur la main de l'utilisateur engendre ainsi une fatigue musculaire à l'utilisation du souffleur. Elle s'ajoute à la fatigue provoquée par le poids du souffleur et l'effort de recul due au jet d'air. Elle réduit le temps et le confort d'utilisation du souffleur.

Il convient de préciser que le couple de torsion résultant de la force de réaction au soufflage devient significatif pour des souffleurs dont la force de poussée est supérieure à 10N.

Le document FR2964987 décrit également un souffleur électroportatif et vise à réduire l'inconfort d'utilisation. Le souffleur de ce document, n'est pas à batterie intégrée mais à batterie déportée. Il s'agit d'une batterie portée au dos de l'utilisateur et reliée au moteur du souffleur par un court cordon d'alimentation.

Le souffleur du document FR2964987, présente une tuyère d'admission de l'air coudée vers le bas, par rapport à une position d'utilisation du souffleur dans laquelle la poignée est située au-dessus du souffleur. La tuyère présente ainsi une bouche d'admission d'air qui dirige l'air avec un angle non nul par rapport à l'axe de ventilateur et donc par rapport à la buse de soufflage. Ce souffleur présente aussi une grille de protection positionnée au niveau de la bouche d'admission pour éviter l'aspiration de corps étrangers et empêcher le passage d'une main vers le ventilateur.

En raison de l'orientation particulière de cette bouche d'admission, la force de réaction au flux d'air entrant génère au niveau de la poignée un couple de torsion qui s'oppose au couple de torsion de soufflage provoqué par le jet d'air sortant et qui le compense donc en partie. L'effort que l'utilisateur doit faire avec sa main pour contrer le couple de torsion de soufflage s'en trouve réduit.
La compensation est généralement partielle. En effet, les forces de réaction au flux d'air d'admission sont plus faibles que les forces de réaction au flux d'air de soufflage, en raison notamment d'une vitesse de déplacement de l'air plus faible à l'admission qu'au soufflage.

### Exposé de l'Invention

Dans la description qui suit les termes "avant", "arrière", "haut", "bas", "supérieur" et "inférieur" s'entendent par rapport à une position d'utilisation du souffleur. Les termes "amont" et "aval" s'entendent par référence à la circulation d'un flux d'air à travers le souffleur.

La présente invention a pour but de proposer un souffleur portatif, avec lequel les efforts subis par la main de l'utilisateur sous l'effet de la force de réaction au flux d'air de soufflage sont réduits.

Un but est en particulier de minimiser un couple de torsion d'avant en arrière supporté par la main de l'utilisateur saisissant la poignée du souffleur lorsque le souffleur est en fonctionnement.

Un autre but de l'invention est de réduire les bruits d'air du souffleur.

Enfin un but de l'invention est de proposer un souffleur léger et équilibré limitant la fatigue de l'utilisateur et augmentant le confort d'utilisation.

Pour atteindre ces buts l'invention propose plus précisément un souffleur portatif comprenant :
- un ventilateur axial de soufflage présentant un axe de ventilateur,
- une poignée présentant un point médian d'équilibre,
- une buse de soufflage connectée en aval du ventilateur axial,
- au moins une tuyère d'aspiration connectée en amont du ventilateur axial, la tuyère d'aspiration comprenant une bouche d'admission d'air avec un axe d'admission formant un angle non nul avec l'axe de ventilateur, la bouche d'admission étant située en amont d'un premier plan perpendiculaire à l'axe de ventilateur et comprenant le point médian de la poignée, et la bouche d'admission étant en outre tournée à l'écart d'un deuxième plan passant par le point médian de la poignée, le deuxième plan étant perpendiculaire à une droite orthogonale à l'axe de ventilateur et passant par le point médian de la poignée, et
- une grille de protection de la bouche d'admission d'air.
Conformément à l'invention:
la tuyère d'admission d'air comprend un réseau de canaux directionnels d'homogénéisation d'un flux d'air d'admission, le réseau de canaux directionnels étant ménagé au voisinage de la bouche d'admission
- le réseau de canaux directionnels présente un axe de réseau, et l'axe de réseau présente un point d'intersection avec le deuxième plan, le point d'intersection étant situé en amont du premier plan
- le réseau de canaux directionnels est configuré pour conférer au flux d'air d'admission une composante directionnelle opposée au ventilateur.

A cette fin, le réseau de canaux directionnels présente au moins l'une des caractéristiques suivantes :
(i) l'axe du réseau forme avec l'axe d'admission un angle avec une composante divergente opposée au ventilateur axial,
(ii) les canaux du réseau de canaux directionnels présentent une section croissante respectivement en fonction d'une distance les séparant du ventilateur axial,
(iii) les canaux du réseau de canaux directionnels présentent une longueur décroissante respectivement en fonction d'une distance les séparant du ventilateur axial.

Le réseau de canaux directionnels exerce son influence sur le flux d'entrée d'air au voisinage direct de la bouche d'admission d'air.
On considère que le réseau de canaux directionnels confère au flux d'air une composante directionnelle opposée au ventilateur lorsqu'il permet de contrarier la trajectoire du flux d'air entrant en modifiant son orientation ou son inclinaison. La configuration du réseau de canaux directionnels permet notamment de contrarier le passage de l'air dans une partie proximale de la bouche d'admission, la plus proche du ventilateur, où l'aspiration d'air par le ventilateur est naturellement la plus forte, et de favoriser le passage de l'air dans une partie distale de la bouche d'admission, la plus éloignée du ventilateur, où l'aspiration d'air par le ventilateur est naturellement la plus faible. La dissymétrie dans l'action du réseau de canaux entre la partie proximale et la partie distale apporte au flux d'air entrant une composante directionnelle tournée à l'opposé du ventilateur selon son axe.

Le réseau de canaux directionnels peut agir par une inclinaison des canaux ou par une non-uniformité dimensionnelle qui favorise le passage de l'air à une distance plus grande du ventilateur. Une inclinaison des canaux vers l'arrière permet de contrarier le passage de l'air dans la partie proximale en augmentant artificiellement la longueur de la trajectoire. De manière comparable, un gradient de longueur ou de section des canaux permet de contrarier le passage de l'air dans la partie proximale en y agissant comme une charge supplémentaire, et de favoriser le passage de l'air dans la partie distale.
Ces aspects sont décrits plus en détail dans la suite du texte.

La poignée du souffleur sert à la fois à porter le souffleur et à le manœuvrer, et notamment à le diriger de façon précise et contrôlée vers des feuilles mortes ou des détritus à déplacer. Il s'agit de préférence d'une poignée prévue pour être saisie d'une seule main.

La poignée est disposée en partie supérieure du souffleur dans une position de portage du souffleur à l'arrêt. La poignée est de préférence inclinée de sorte que la buse de soufflage soit orientée dans une direction préférentielle prédéterminée lorsque qu'un utilisateur tient la poignée. Par ailleurs, la poignée est disposée de préférence sensiblement à l'aplomb d'un centre de gravité des masses du souffleur, ou pour le moins de la partie du souffleur supportée par la poignée, de manière à ce que les masses soient réparties de manière sensiblement uniforme à l'avant et à l'arrière de la poignée. Cette mesure se traduit par la définition d'un point médian d'équilibre sur la poignée. De préférence, le point médian d'équilibre se trouve sensiblement au milieu de la poignée prise dans son axe. Lorsque la poignée dispose d'une gâchette actionnable par l'index, le point médian d'équilibre se situe de préférence légèrement à l'arrière de la gâchette, au voisinage du majeur de la main de l'utilisateur saisissant la poignée.

L'axe de ventilateur est compris comme étant à l'axe de rotation des pales du ventilateur de soufflage axial ou pour le moins l'axe selon lequel le ventilateur de soufflage dirige le flux d'air à sa sortie. Il correspond à la direction du flux d'air en aval du ventilateur de soufflage et à proximité immédiate du ventilateur. L'axe d'admission est défini par une ligne perpendiculaire à un plan médian selon lequel s'étend la bouche d'admission et passant sensiblement par le milieu de la bouche d'admission. On considère un plan médian dans la mesure où la bouche d'admission n'est pas nécessairement plane en soi.

L'axe de réseau est compris comme un axe moyen de l'ensemble des canaux, étant entendu que tous les canaux ne sont pas nécessairement parallèles entre eux. En effet chaque canal peut être orienté selon un axe qui lui est propre. L'axe de réseau passe également par le milieu de la bouche d'admission.

Lorsque les canaux sont tous parallèles entre eux l'axe de réseau est parallèle à l'axe de chaque canal. Par ailleurs lorsque les canaux sont tous perpendiculaires au plan moyen de la bouche d'admission l'axe d'admission et l'axe de réseau sont confondus.

L'orientation de la bouche d'admission à l'écart du deuxième plan fait que cette bouche est tournée vers le sol, dans une position d'utilisation normale du souffleur. Cette mesure, de même que l'angle non nul que forme l'axe d'admission avec l'axe de ventilateur permet d'utiliser la force de réaction au flux d'air entrant pour contrer au moins en partie le couple de torsion exercé par le soufflage au point médian d'équilibre de la poignée.

L'importance de la compensation obtenue dépend de la force de réaction au flux d'air entrant, et donc de la vitesse de l'air au niveau de chaque canal, mais aussi à la distance entre l'axe de réseau et le point médian d'équilibre de la poignée, cette distance ayant un effet de bras de levier.

En l'absence des canaux, seule la distance entre l'axe d'admission et le point d'équilibre de la poignée a un effet de bras de levier. Dans ce cas, une augmentation de la distance entre l'axe d'admission et le point d'équilibre de la poignée permettrait a priori d'améliorer la compensation du couple de torsion de soufflage. Toutefois, l'augmentation de cette distance reviendrait à augmenter la longueur de la tuyère d'admission et donc l'encombrement et le poids du souffleur.

Les dispositions de l'invention et en particulier le réseau de canaux directionnels permettent également d'améliorer la compensation du couple de torsion de soufflage sans modifier la longueur de la tuyère.

L'invention repose sur un constat que la vitesse de l'air entrant par la bouche d'admission d'un souffleur tel que décrit dans le brevet FR2964987 n'est pas uniforme. L'air d'admission a une vitesse naturellement plus élevée dans la partie proximale de la bouche d'admission, c'est-à-dire la partie la plus proche du ventilateur, inversement, l'air d'admission a une vitesse naturellement plus réduite dans une partie distale de la bouche, plus éloignée du ventilateur. Dans le cas d'une tuyère d'admission coudée, le côté proximal de la bouche d'admission est le côté avant, voisin de la région de fort rayon de courbure de la tuyère, et le côté distal est le côté arrière dans la région de plus faible rayon de courbure. La résultante des forces de réaction au flux d'air entrant est alors sensiblement orientée selon l'axe d'admission et se situe dans la zone des plus fortes vitesses, entre la partie proximale de la bouche d'admission et son centre.

Dans le cadre de l'invention, le réseau de canaux directionnels mentionné précédemment a pour fonction d'homogénéiser le flux d'air d'admission, et en particulier la vitesse de l'air d'admission, sur l'ensemble de la bouche d'admission. Le réseau de canaux directionnels a pour effet de diriger les filets d'air au niveau de chaque canal dans une direction sensiblement dans l'axe du canal. L'orientation de l'air dans une direction privilégiée non naturelle augmente la perte de charge dans les canaux de la partie proximale de la bouche d'admission. Elle permet de diminuer le débit d'air et donc la vitesse moyenne de l'air dans ces canaux. En conséquence, elle permet aussi de favoriser des débits d'air plus élevés dans la partie distale de la bouche d'admission et donc des vitesses d'air plus élevées dans les canaux de cette partie. L'homogénéisation a ainsi pour effet principal d'orienter la résultante des forces de réaction au déplacement de l'air d'admission sensiblement dans l'axe de réseau tout en déplaçant le point d'application de cette résultante des forces depuis la zone proximale de la bouche d'admission vers le côté distal c'est-à-dire vers l'arrière du souffleur. Cette orientation, associée au déplacement de la résultante des forces de réaction a pour effet d'augmenter le bras de levier de ces forces par rapport au point médian d'équilibre de la poignée. L'homogénéisation augmente ainsi la contribution du flux d'air d'admission à la compensation du couple de torsion généré par le flux d'air de soufflage. Par simplification, dans la présente description on désigne par "force de réaction" à l'air d'admission ou à l'air entrant, la résultante de l'ensemble des forces de réaction aux filets d'air entrant dans le souffleur par la bouche d'admission.

Par ailleurs, et comme mentionné précédemment, l'axe du réseau de canaux directionnels présente un point d'intersection avec le deuxième plan situé en amont du premier plan, c'est-à-dire à l'arrière de ce plan. Cette caractéristique permet de garantir que le couple généré par l'admission d'air au point d'équilibre de la poignée est toujours opposé au couple généré par le soufflage.

On considère que le réseau de canaux directionnels est ménagé au voisinage de la bouche d'admission lorsqu'il est situé à l'extrémité de la tuyère d'admission formant la bouche d'admission ou dans la tuyère d'admission en aval de la bouche d'admission mais à une distance plus faible de la bouche d'admission que de l'extrémité opposée de la tuyère raccordée au ventilateur de soufflage.

Le réseau de canaux directionnels peut être formé d'une seule pièce avec la grille de protection ou simplement au voisinage de la grille de protection. Le réseau de canaux peut aussi être utilisé pour former la grille de protection.

Une fonction de la grille de protection est d'éviter que des objets ne soient aspirés dans la tuyère d'admission. Une autre fonction est d'éviter qu'un utilisateur n'introduise accidentellement la main dans la tuyère et n'atteigne le ventilateur de soufflage en mouvement.

Selon un mode de réalisation particulier du réseau de canaux directionnels, les canaux peuvent être agencés selon un motif en nid d'abeille. Un tel agencement permet d'optimiser l'homogénéisation des vitesses de l'air d'admission tout en limitant la perte de charge induite par le réseau. Le motif en nid d'abeille favorise une section de passage d'air optimale sur l'ensemble de la bouche d'admission. Il minimise en effet la surface des parois entre chaque canal qui entrave le passage de l'air. D'autres formes de canaux, tels que des canaux à section circulaire, oblongue, ou polygonale sont toutefois également envisageables.

Le réseau de canaux directionnels peut être conformé de manière que l'axe de réseau soit parallèle à l'axe d'admission, et confondu avec cet axe. Cette caractéristique n'est cependant pas nécessaire. Il est possible en effet d'améliorer encore la compensation du couple de torsion de soufflage en inclinant l'axe de réseau par rapport à l'axe d'admission avec une composante divergente opposée au ventilateur. En d'autres termes l'axe de réseau peut être incliné de manière à conférer au flux d'air entrant une composante vers l'arrière du souffleur. Dans ce cas, c'est principalement l'inclinaison de l'axe de réseau qui confère au flux d'air d'admission sa composante de direction opposée au ventilateur.

Une telle inclinaison permet éventuellement de réduire l'angle entre l'axe d'admission et l'axe de ventilateur. Elle permet aussi d'augmenter le déplacement vers l'arrière, c'est-à-dire à l'opposé du ventilateur, de la résultante des forces de réaction générées par le flux d'air d'admission.

Pour améliorer l'homogénéisation des vitesses de l'air d'admission et amplifier le déplacement de la résultante des forces de réaction il est encore possible de prévoir des canaux directionnels avec une section croissante respectivement en fonction d'une distance les séparant du ventilateur axial parallèlement à l'axe de ventilateur. Les canaux sont alors plus étroits là où la vitesse d'admission d'air a tendance à être la plus élevée et plus larges là où la vitesse d'admission d'air a tendance à être la plus faible.

En d'autres termes, la section des canaux permet de compenser des distances plus ou moins grandes parcourues par les filets d'air d'admission avant d'atteindre le ventilateur. Les canaux de section variable permettent de générer des pertes de charges variables et de diminuer de manière correspondante la vitesse du filet d'air traversant chaque canal. Dans la zone de la bouche d'admission où le trajet des filets d'air vers le ventilateur de soufflage est le plus court, des canaux avec une section plus faible sont prévus de manière à opposer une certaine résistance au passage de l'air. Dans la zone où le trajet de l'air est plus long, la section est plus importante de manière à opposer une résistance plus faible au passage de l'air. La progression de la section des canaux peut être linéaire ou non. La section variable des canaux permet ainsi d'améliorer encore l'homogénéisation des vitesses de l'air au niveau de la bouche d'admission. Dans ce cas c'est la progression de la section des canaux qui confère au flux d'air d'admission sa composante de direction opposée au ventilateur.

Selon une autre possibilité, comparable, il est également possible d'améliorer l'homogénéisation des vitesses de l'air en prévoyant des canaux directionnels avec une longueur décroissante respectivement en fonction d'une distance les séparant du ventilateur axial parallèlement à l'axe de ventilateur. La longueur variable des canaux permet de créer une différence de perte de charge pour favoriser des vitesses d'air plus élevées dans les zones de la bouche d'admission recevant l'air dont la trajectoire jusqu'au ventilateur est la plus longue.
Dans ce cas c'est la progression de la longueur des canaux qui confère au flux d'air d'admission une composante de direction opposée au ventilateur.

Les canaux présentent, de préférence, une longueur moyenne qui est supérieure ou égale à deux fois l'épaisseur minimum d'une paroi séparant des canaux adjacents.

Il est possible encore de retenir un panachage des différentes caractéristiques en prévoyant des canaux de longueur différente, de section différentes, et d'orientation individuelle différente. Le choix des mesures retenues peut être dicté par un souci de minimiser la perte de charge globale, ou la résistance totale opposée à l'air entrant, par le réseau de canaux directionnels, compte tenu de la forme générale du souffleur.

Il convient de préciser que le réseau de canaux directionnels peut s'étendre ou non selon un plan. Une forme galbée du réseau de canaux peut accompagner notamment des canaux dont l'orientation individuelle n'est pas uniforme.

Comme indiqué précédemment, l'axe d'admission forme avec l'axe de ventilateur un angle non nul sachant que la bouche d'admission est tournée vers le bas. Cet angle est de préférence compris entre 30 et 120 degrés d'angle et encore de préférence compris entre 45 et 90 degrés d'angle.

Compte tenu de la position de travail inclinée du souffleur, un tel angle permet non seulement d'optimiser la compensation de la contrainte de torsion exercée au point médian d'équilibre de la poignée mais aussi de limiter les pertes de charge et de limiter les bruits d'air lors de l'utilisation du souffleur.

Dans un mode de réalisation particulier du souffleur prévu pour limiter au maximum les bruits d'air, l'axe de réseau peut être un axe sensiblement orthogonal à l'axe de ventilateur. Il peut aussi former un angle non nul avec cet axe orthogonal à l'axe de ventilateur.

Le souffleur peut comporter, outre le réseau de canaux directionnels, des déflecteurs d'air ménagés au voisinage de la bouche d'admission. Les déflecteurs sont situés en amont du réseau de canaux directionnels. Les déflecteurs permettent d'augmenter l'efficacité des canaux et de limiter davantage les bruits d'aspiration d'air.

Dans la construction du souffleur il peut avantageusement être prévu que la distance entre l'axe d'admission et le point médian d'équilibre de la poignée soit supérieure à une distance entre l'axe de ventilateur et le point médian d'équilibre de la poignée.

Cette mesure permet, indépendamment du réseau de canaux directionnels d'obtenir une meilleure compensation du couple de torsion au point d'équilibre de la poignée. En effet, la force de réaction au flux d'air d'admission étant plus faible que la force de réaction au flux d'air de soufflage, il est possible de compenser en partie cette disparité au moyen d'un bras de levier plus important pour la force de réaction au flux d'air d'admission.

De la même façon, la distance entre l'axe de réseau et le point médian de la poignée est de préférence supérieure à une distance entre l'axe de ventilateur et le point médian de la poignée.

Selon un perfectionnement de l'invention la buse de soufflage peut être pourvue d'une bouche de soufflage avec un axe de soufflage formant un angle avec l'axe de ventilateur, la bouche de soufflage étant tournée à l'écart du deuxième plan mentionné précédemment. En d'autres termes la bouche de soufflage est infléchie vers le sol.
L'axe de soufflage est compris comme étant un axe perpendiculaire au plan médian de la bouche de soufflage et passant sensiblement au milieu de la bouche de soufflage. On considère un plan médian dans la mesure où la bouche de soufflage n'est pas nécessairement plane.

L'angle entre l'axe de soufflage et l'axe de ventilateur, c'est-à-dire l'angle d'inflexion est très faible pour ne pas créer de perte de charge significative s'opposant au flux d'air sortant. Il est compris par exemple entre 5 et 15 degrés.
La force de réaction au flux d'air sortant s'oriente alors selon l'axe de soufflage qui dans ce cas n'est plus confondu avec l'axe de ventilateur. La légère inflexion vers le bas de cet axe permet de réduire le bras de levier effectif de la force de réaction au flux d'air sortant, c'est-à-dire du soufflage, par rapport au point médian d'équilibre de la poignée. Le couple de torsion s'exerçant au point d'équilibre de la poignée, et donc sur la main de l'utilisateur, s'en trouve réduit voire annulé.

Le ventilateur d'un souffleur conforme à l'invention peut être mû par un moteur thermique, ou par un moteur électrique.

Aussi, dans une forme de réalisation préférée du souffleur, le souffleur peut comporter un moteur électrique d'entrainement du ventilateur, et une batterie d'alimentation électrique du moteur, la batterie étant de préférence une batterie déportée. Il s'agit, par exemple d'une batterie portée au dos ou à la ceinture et reliée au moteur par un cordon. Le souffleur électroportatif à batterie déportée peut être configuré pour générer des forces de soufflages supérieures à 10N et même supérieures à 15N. Dans une réalisation particulière cette force est égale à 18 N.

D'autres caractéristiques et avantages de l'invention ressortent de la description qui suit, en référence aux figures des dessins. Cette description est donnée à titre illustratif et non limitatif.

### Brève description des figures

La figure 1 montre un souffleur de type connu porté par un utilisateur.
La figure 2 est une coupe d'une partie d'un souffleur conforme à l'invention.
La figure 3 est une coupe à plus grande échelle d'une tuyère d'admission d'un souffleur conforme à l'invention.
La figure 4 est une perspective, vue de l'aval, d'un réseau de canaux directionnels utilisé dans la tuyère d'admission de la figure 3.
La figure 5 est une perspective, vue de l'amont, d'un réseau de canaux directionnels utilisé dans la tuyère d'admission de la figure 3.
La figure 6 est une coupe transversale du réseau de canaux directionnels selon un plan de coupe parallèle à l'axe du réseau et à l'axe de ventilateur.
La figure 7 est un détail à plus grande échelle de la coupe de la figure 6.
La figure 8 montre un souffleur conforme à l'invention avec une bouche de soufflage infléchie.
La figure 9 est une vue d'un autre motif de réalisation du réseau de canaux directionnels dans lequel la section des canaux est croissante de l'extrémité proximale à l'extrémité distale du réseau.

Les différentes figures sont représentées en échelle libre.

### Description détaillée de modes de mise en œuvre de l'invention

Dans la description qui suit des parties identiques, équivalentes ou comparables des différentes figures sont repérées avec les mêmes signes de référence de manière à pouvoir se reporter plus facilement d'une figure à l'autre.

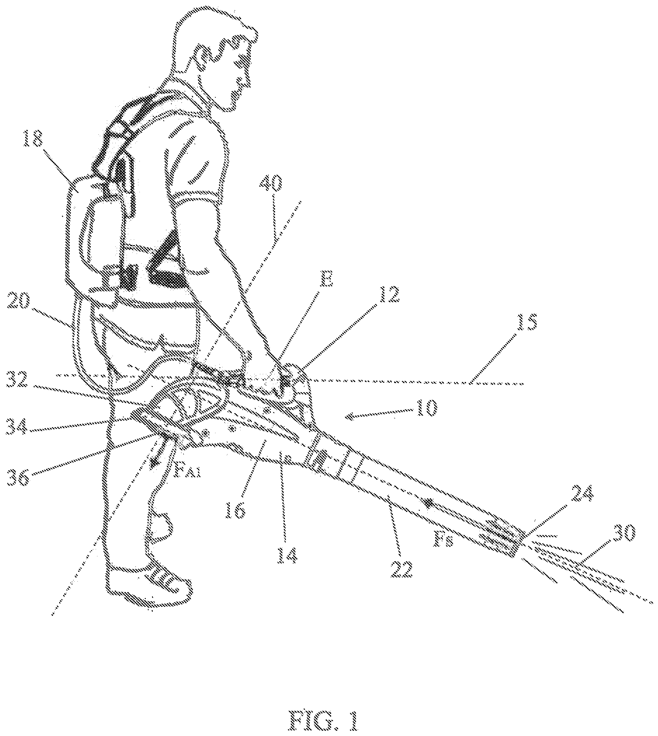

La figure 1 montre un souffleur 10 de type connu, et en particulier connu par le document FR2964987 précédemment évoqué, auquel l'invention peut avantageusement être appliquée. Le souffleur de la figure 1 présente un grand nombre de caractéristiques communes avec le souffleur conforme à l'invention et décrit en référence aux figures suivantes. On peut ainsi se référer à la figure 1 pour les caractéristiques communes.

La figure 1 montre le souffleur porté et manœuvré par un utilisateur dans une position d'utilisation normale pour le balayage de feuilles mortes. L'utilisateur tient le souffleur par une poignée 12 ménagée dans la partie supérieure d'un carter principal 14 du souffleur.

Le carter principal 14 contient essentiellement un ventilateur de soufflage axial 16 destiné à créer un flux d'air. Le ventilateur de soufflage est mu par un moteur électrique et alimenté en énergie par une batterie d'accumulateurs électriques 18 porté au dos de l'utilisateur. Un court cordon 20 relie la batterie d'accumulateurs à un connecteur du souffleur situé à l'arrière de la poignée.

Dans la suite de la description, la mention d'un centre de gravité du souffleur, et différents plans ou axes du souffleur, ne tient pas compte de la batterie d'accumulateurs 18 ni du cordon 20.

A l'avant du carter principal 14, c'est-à-dire en aval du ventilateur de soufflage, est connectée une buse de soufflage 22 dont l'extrémité libre forme une bouche de soufflage 24. La buse de soufflage est centrée sur un axe de ventilateur 30 du ventilateur de soufflage axial. Cet axe forme avec le sol un angle non nul dans la position normale d'utilisation. Un axe de la bouche de soufflage est ici confondu avec l'axe de ventilateur 30.

A l'arrière du carter principal 14, c'est-à-dire en amont du ventilateur de soufflage est connectée une tuyère d'admission 32 destinée à aspirer de l'air et à le conduire jusqu'au ventilateur de soufflage. L'extrémité libre de la tuyère d'aspiration présente une bouche d'admission 34 coiffée d'une grille de protection 36. La fonction de la grille de protection 36 est d'éviter l'aspiration de détritus ou d'objets. La grille interdit également l'introduction de la main dans la tuyère afin d'éviter tout contact et toute blessure avec le ventilateur de soufflage.

On peut noter que la tuyère d'admission 32 est coudée. La bouche d'admission 34 est tournée vers le sol lorsque le souffleur est utilisé dans sa position normale représentée à la figure 1. La bouche d'admission 34 présente un axe d'admission 40 qui forme un angle non nul avec l'axe de ventilateur 30. Sur la figure cet angle est proche de 90°. L'axe d'admission forme également un angle avec le sol dans la position normale d'utilisation. La poignée 14 s'étend dans un plan de symétrie du carter principal, parallèle à l'axe de ventilateur 30. Un axe 15 de la poignée 12 est sensiblement parallèle au sol dans la position normale d'utilisation du souffleur, la buse de soufflage étant alors orientée dans une direction de travail préférentielle, de manière à garantir une position naturelle de la main.

La poignée 12 est en outre ménagée sensiblement à l'aplomb du centre de gravité du souffleur de manière à équilibrer les masses à l'avant et à l'arrière de la poignée. Plus précisément la poignée présente un point médian d'équilibre E, correspondant sensiblement à la position du majeur de la main de l'utilisateur saisissant la poignée.

Lorsque le souffleur de la figure 1 est en utilisation l'admission d'air par la bouche d'admission 34 provoque une force de réaction F_{A1} qui s'applique sensiblement parallèlement à l'axe d'admission et qui est tournée vers le sol. De manière similaire le flux d'air de soufflage sortant de la buse 22 et de la bouche de soufflage 24 provoque une force de réaction F_{S} qui s'applique sensiblement parallèlement à l'axe de ventilateur et qui est tournée à l'écart du sol. Grâce à l'orientation de la bouche d'admission 34 vers le sol les forces de réaction F_{A1} et F_{S} à l'admission d'air et au soufflage, créent au point médian d'équilibre E de la poignée 12 des couples de torsion de sens opposé.

L'intensité de la force de réaction au soufflage F_{S} est supérieure à celle de la force de réaction à l'admission F_{A1}, en raison de la vitesse plus élevée de l'air à la sortie du souffleur. Ainsi, et en dépit d'un bras de levier plus important pour la force de réaction à l'admission le couple résultant de ces deux forces au point médian d'équilibre E de la poignée n'est pas nul. Lorsque le souffleur est à l'arrêt, le centre de gravité du souffleur est situé sensiblement au-dessous et à la verticale du point médian d'équilibre E de la poignée. Lorsque le souffleur est en fonctionnement, le centre de gravité a une tendance à basculer dans une rotation autour du point médian d'équilibre E vers une nouvelle position d'équilibre en arrière du point médian. Cette nouvelle position ne correspond pas forcément à une orientation souhaitée du flux d'air. Elle nécessite alors un effort au niveau de la poignée, et donc au niveau de la main de l'utilisateur, pour compenser la rotation et maintenir le souffleur dans l'orientation souhaitée du flux d'air.

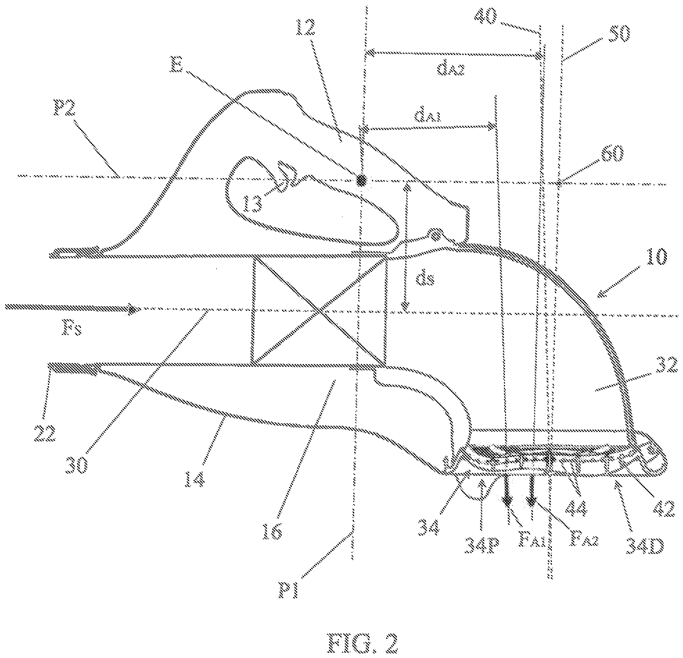

La figure 2 montre à plus grande échelle et en coupe une partie d'un souffleur conforme à l'invention. Sur cette figure le ventilateur de soufflage 16 est représenté de manière sommaire et symbolique de manière à ne pas surcharger la figure.

On peut observer que l'axe d'admission 40 de la bouche d'admission 34, passe au milieu de la bouche d'admission et est perpendiculaire à un plan moyen de la bouche d'admission. L'axe de soufflage de la bouche de soufflage, non représenté, est considéré comme confondu avec l'axe de ventilateur 30.

La figure 2 montre également le point médian d'équilibre E de la poignée 12, légèrement à l'arrière, c'est-à-dire "en amont" d'une gâchette d'actionnement 13 du souffleur.

Le trajet de l'air depuis la bouche d'admission 34 jusqu'au ventilateur de soufflage 16 n'est pas uniforme en longueur. En effet, le trajet varie d'une longueur minimum pour de l'air aspiré dans une région 34 P proximale de la bouche d'admission à une longueur maximum pour de l'air aspiré dans une région distale 34D de la bouche d'admission. Les termes "proximal" et "distal" sont utilisés pour signifier une distance plus ou moins grande jusqu'à l'entrée du ventilateur de soufflage 16. Cette distance peut être considérée géométriquement par rapport à l'axe de ventilateur ou linéairement en suivant la courbure de la tuyère 32.

En l'absence d'un réseau de canaux directionnels, la vitesse de l'air d'admission est naturellement plus grande dans la région proximale de la bouche d'admission que dans la région distale, en raison du trajet d'air plus court. Ainsi, les forces de réaction à l'admission d'air, ou plus précisément leur résultante F_{A1} sur toute la surface de la bouche d'admission ne s'applique pas au centre de la bouche d'admission. Elle est décalée en direction de la région proximale 34P de la bouche d'admission où la vitesse de l'air d'admission est plus élevée. Il en résulte un bras de levier effectif réduit par rapport au point médian d'équilibre E de la poignée 12, représenté par la distance d_{A1}.

Toutefois, et conformément à l'invention la bouche d'admission d'air 34 reçoit un réseau de canaux directionnels 42 constitué par la juxtaposition d'un grand nombre de canaux 44. Le réseau se caractérise par un axe de réseau 50 qui est déterminé à la fois par le plan moyen du réseau et par l'orientation moyenne des canaux 44 du réseau, sachant que les canaux ne sont pas nécessairement tous parallèles entre eux. L'axe de réseau 50, considéré au centre du réseau, présente par rapport à l'axe d'admission 40 une composante divergente opposée au ventilateur de soufflage 16. Sur la figure 2, l'axe de réseau 50 passe sensiblement par le centre de la bouche d'admission, comme l'axe d'admission 40, mais est penché vers l'arrière au-dessus du réseau de canaux directionnels 42.

Le réseau de canaux directionnels 42 a une fonction d'homogénéisation des vitesses de l'air d'admission sur l'ensemble de la bouche d'admission 34. Il réduit en particulier le gradient de vitesses ou la disparité des vitesses entre la région proximale 34P et la région distale 34D de la bouche d'admission 34. L'air dans chaque canal est en effet forcé de prendre à l'entrée du canal une direction préférentielle dans l'axe du canal. Quand il ne s'agit pas de la direction que l'air aurait prise naturellement en l'absence de canal, l'air subit une résistance à l'entrée du canal. Sa vitesse d'entrée, et donc le débit d'air dans le canal considéré sont donc réduits par rapport à ceux dans la même section de la bouche d'admission en l'absence de canal. Le débit d'air traversant le souffleur est donc réparti vers les canaux présentant une moindre résistance à l'entrée d'air. Ceci a pour effet d'augmenter le débit d'air dans les canaux de la région distale, et donc la vitesse de l'air dans ces canaux. Il en résulte que les forces de réaction dans les canaux de la partie proximale sont réduites, alors qu'elles sont augmentées dans les canaux de la partie distale.

La résultante des forces de réaction à l'admission d'air se trouve ainsi déplacée en direction du centre de la bouche d'admission. Elle est indiquée par un vecteur F_{A2} sur la figure 2.

En plus de l'homogénéisation de la vitesse de l'air, le réseau 42 de canaux directionnels a pour effet d'orienter un flux d'air entrant parallèlement à l'axe de réseau 50. La force de réaction à l'admission d'air F_{A2} a ainsi également tendance à s'aligner selon l'axe de réseau 50.

Le couple exercé par la force F_{A2} au point d'équilibre E de la poignée 12 bénéficie ainsi d'un bras de levier d_{A2} supérieur au bras de levier d_{A1} qu'aurait la force de réaction F_{A1} en l'absence du réseau de canaux directionnels.

On peut observer sur la figure 2 que la bouche d'admission 34 est située à l'arrière du point d'équilibre E. Plus précisément la bouche d'admission 34 est située en amont d'un premier plan P1 perpendiculaire à l'axe de ventilateur 30 et comprenant le point d'équilibre E de la poignée. Sur la figure 2 le plan P1, également perpendiculaire au plan de la figure, est indiqué avec une ligne discontinue en trait mixte.

Par ailleurs, la bouche d'admission est orientée vers le bas. Plus précisément, elle est tournée à l'écart d'un deuxième plan P2 passant toujours par le point médian d'équilibre E de la poignée 12 et perpendiculaire à une droite orthogonale à l'axe de ventilateur 30, et passant par le point médian d'équilibre E. Sur la figure 2 cette droite est confondue avec le tracé indiquant le plan P1. Le deuxième plan P2 est également perpendiculaire au plan de la figure 2. Il est indiqué en trait mixte.

Enfin, un point d'intersection 60 entre l'axe de réseau 50 et le deuxième plan P2 est situé en amont du premier plan P1.

L'ensemble de ces mesures permet de mettre utilement à profit un couple créé par la force de réaction à l'admission F_{A2} au point médian d'équilibre E de la poignée 12, pour l'opposer à un couple créé par la force de réaction au soufflage F_{S}. Dans l'exemple de la figure 2, la force de réaction au soufflage Fs s'applique au point médian d'équilibre E de la poignée avec un bras de levier d_{S} inférieur au bras de levier d_{A2} de la force de réaction à l'admission.

Lorsque le souffleur 10 est en fonctionnement, la force de réaction au soufflage F_{S} génère sur la poignée 12, et particulièrement en son point médian d'équilibre E un couple de torsion autour d'un axe passant par le point E et constituant l'intersection des plans P1 et P2, c'est-à-dire perpendiculaire au plan de la figure. Le réseau de canaux directionnels permet, par rapport au souffleur connu de l'état de la technique, d'améliorer sensiblement la compensation du couple de torsion de soufflage et de soulager la compensation devant être exercée par la main de l'utilisateur.

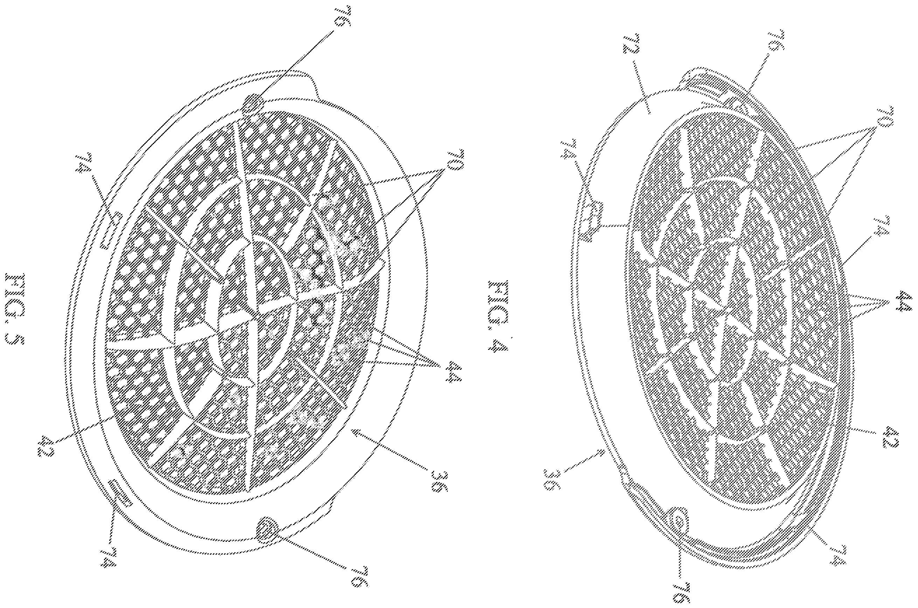

Les figures 4 et 5 montrent une vue en perspective de réseau de canaux 42 formé d'une seule pièce avec la grille de protection 36 de la bouche d'admission. La figure 4 est une vue du réseau de canaux du côté aval du flux d'air alors que la figure 5 est une vue de ce réseau du côté amont du flux d'air.
La grille de protection 36 est formée par des nervures 70 agencées de manière concentrique à un centre de la grille et de manière radiale en se raccordant à un bord périphérique 72 de la grille. Les nervures 70 délimitent des secteurs dans lesquels se trouvent les canaux 44 du réseau 42 de canaux directionnels. Dans l'exemple des figures 4 et 5 les canaux 44 sont tous parallèles entre eux et présentent une section en nid d'abeille. Le rebord 72 de la grille de protection est pourvu d'ergots 74 et de passages de vis 76 pour sa fixation sur la bouche d'admission d'air, c'est-à-dire à l'extrémité de la tuyère d'admission.

Les figures 4 et 5 montrent une forme générale en ellipse de la grille de protection 36 et du réseau de canaux directionnels 42.

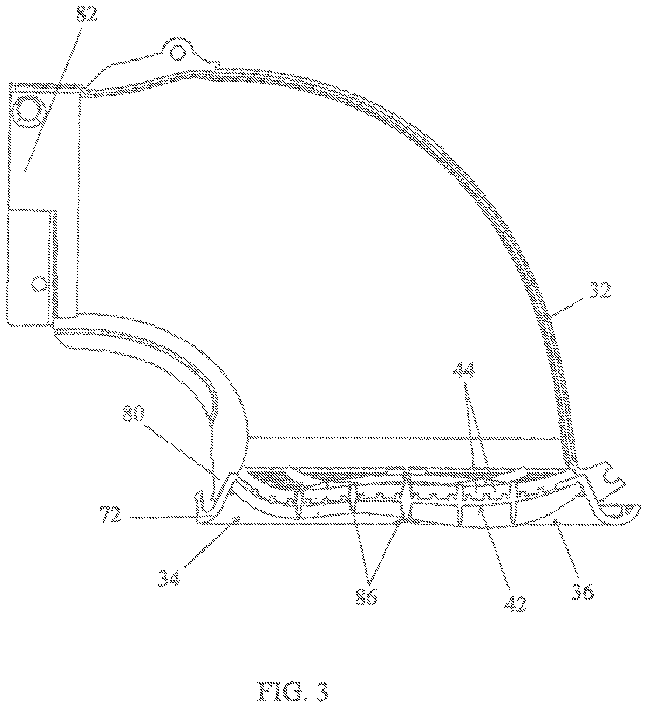

La figure 3 montre en coupe la fixation de la grille de protection 36 et du réseau de canaux directionnels sur la tuyère 32. Le rebord 72 de la grille vient en appui sur un épaulement 80 de la tuyère. Un épaulement comparable plus ou moins profond permet le cas échéant d'ajuster la profondeur du réseau de canaux directionnels 42 dans la tuyère 32 en aval de la bouche d'admission d'air 34.

L'extrémité de la tuyère 32 opposée à la bouche d'admission 34 est pourvue d'une bride de fixation 82 par laquelle la tuyère est fixée sur le carter principal du souffleur non représenté sur la figure 3.

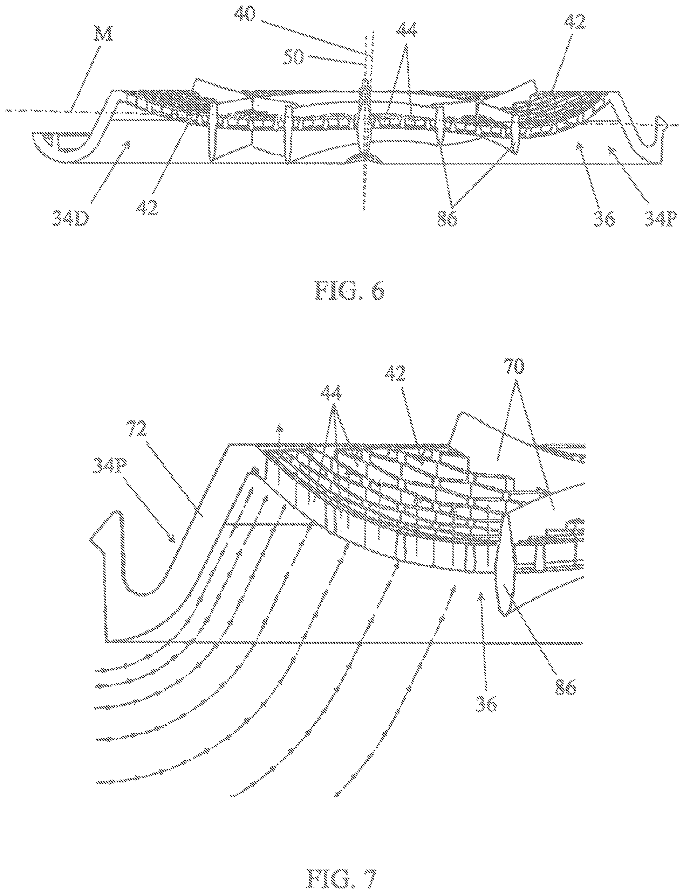

La figure 6 est une coupe de la grille de protection au niveau de la bouche d'admission et du réseau de canaux directionnels 42. On peut observer que le réseau de canaux 42, formant ici la grille de la bouche d'admission, n'est pas plan. On peut alors définir un plan moyen M de la bouche d'admission avec un axe d'admission 40 perpendiculaire à ce plan. La figure 6 indique aussi l'axe de réseau 50 mentionné précédemment et formant un axe moyen par rapport à l'axe de chacun des canaux. Il passe par le milieu du réseau et de la grille de protection. Dans l'exemple de la figure 6, les canaux sont parallèles entre eux et alignés sur l'axe de réseau 50.

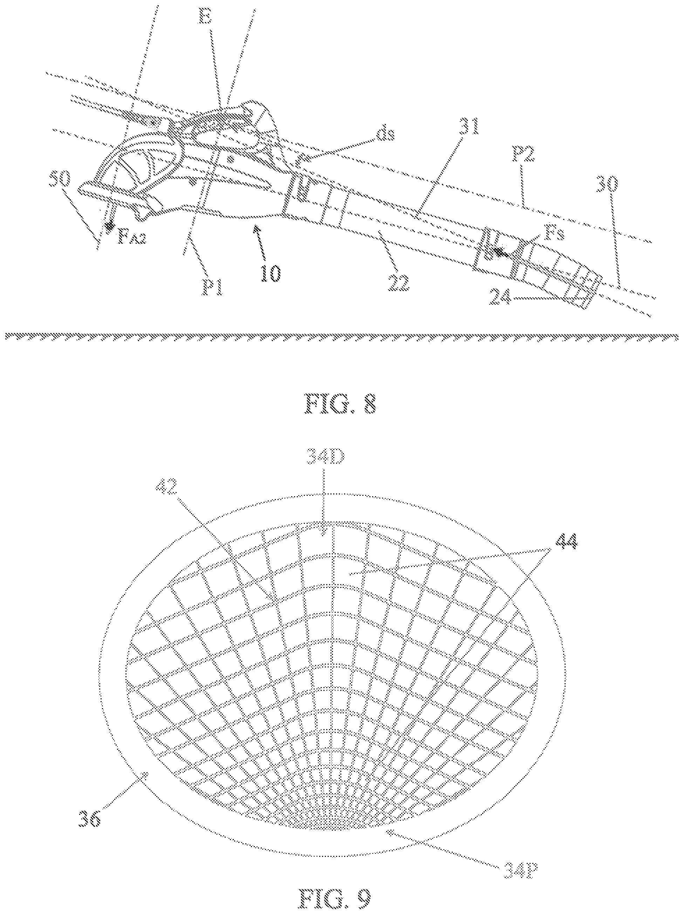

La figure 9 montre un mode de réalisation du réseau de canaux directionnels intégrés à la grille de protection dans lequel la section des canaux est croissante de l'extrémité proximale à l'extrémité distale.

Les figures 3 et 6 montrent également des déflecteurs d'air 86 qui s'étendent au voisinage de la bouche d'admission. Les déflecteurs d'air 86 sont solidaires de la grille de protection 36 et disposés essentiellement en amont du réseau de canaux directionnels 42. La fonction des déflecteurs d'air est d'améliorer un écoulement laminaire de l'air et de réduire les bruits d'air.

La figure 7 montre, à plus grande échelle, un détail de la grille de protection et du réseau de canaux directionnels 42 au niveau de la partie proximale 34P. De petites flèches indiquent les filets d'air d'admission dirigés d'abord de manière naturelle vers la bouche d'admission 34, puis canalisés dans les canaux 44 et orientés parallèlement à l'axe de réseau. Dans l'exemple de la figure 7 les canaux sont tous parallèles. Il est toutefois envisageable de réaliser un réseau de canaux non parallèles.

La figure 8 montre un souffleur conforme à l'invention dont la buse de soufflage 22 présente une bouche de soufflage 24 légèrement tournée à l'écart du deuxième plan P2 mentionné précédemment. En d'autres termes, la bouche de soufflage 24, à l'extrémité de la buse 22, est légèrement infléchie vers le bas.
La force de réaction au soufflage F_{S} a ainsi tendance à s'exercer selon un axe de soufflage 31 qui n'est plus confondu avec l'axe de ventilateur 30 mais qui forme avec cet axe un angle non nul.
Cet angle est choisi suffisamment faible pour limiter son influence sur l'efficacité du soufflage.
Toutefois la distance d_{S} entre l'axe de soufflage 31 et le point médian d'équilibre E est réduit comparativement à cette distance prise pour un axe de soufflage confondu avec l'axe de ventilateur. Le bras de levier de la force de réaction au soufflage et le couple de torsion qu'elle exerce au point d'équilibre est également réduit.
La légère inflexion de la buse de soufflage, combinée à l'utilisation d'un réseau de canaux tels que décrits précédemment permet de réduire considérablement sinon d'annuler le couple de torsion subi au niveau de la poignée.

## Revendications

1. Souffleur portatif (10) comprenant :
- un ventilateur axial de soufflage (16) présentant un axe de ventilateur (30),
- une poignée (12) présentant un point médian d'équilibre (E)
- une buse de soufflage (22) connectée en aval du ventilateur axial,
- au moins une tuyère d'aspiration (32) connectée en amont du ventilateur axial, la tuyère d'aspiration comprenant une bouche d'admission d'air (34) avec un axe d'admission (40) formant un angle non nul avec l'axe de ventilateur (30), la bouche d'admission étant située en amont d'un premier plan (P1) perpendiculaire à l'axe de ventilateur (30) et comprenant le point médian d'équilibre (E) de la poignée, et la bouche d'admission d'air (34) étant en outre tournée à l'écart d'un deuxième plan (P2) passant par le point médian de la poignée, le deuxième plan étant perpendiculaire à une droite orthogonale à l'axe de ventilateur (30) et passant par le point médian d'équilibre (E) de la poignée,
- une grille de protection (36) de la bouche d'admission d'air,
- la tuyère d'admission d'air comprenant un réseau (42) de canaux directionnels (44) d'homogénéisation d'un flux d'air d'admission, le réseau de canaux directionnels étant ménagé au voisinage de la bouche d'admission d'air (34),
- le réseau de canaux directionnels (42) présentant un axe de réseau (50), et l'axe de réseau présente un point d'intersection (60) avec le deuxième plan, le point d'intersection étant situé en amont du premier plan (P1), **caractérisé en ce que** le réseau de canaux directionnels est configuré pour conférer au flux d'air d'admission une composante directionnelle opposée au ventilateur, le réseau de canaux directionnels présentant au moins l'une des caractéristiques suivantes :
(i) l'axe du réseau (50) forme avec l'axe d'admission (40) un angle avec une composante divergente opposée au ventilateur axial (16),
(ii) les canaux (44) du réseau de canaux directionnels présentent une section croissante respectivement en fonction d'une distance les séparant du ventilateur axial (16),
(iii) les canaux (44) du réseau de canaux directionnels présentent une longueur décroissante respectivement en fonction d'une distance les séparant du ventilateur axial (16).

2. Souffleur selon la revendication 1, dans lequel le réseau de canaux directionnels (42) est formé d'une seule pièce avec la grille de protection (36).

3. Souffleur selon la revendication 1, dans lequel le réseau de canaux directionnels (42) est formé au voisinage de la grille de protection (36).

4. Souffleur selon la revendication 1, dans lequel le réseau de canaux directionnels (42) constitue la grille de protection (36).

5. Souffleur selon l'une quelconque des revendications précédentes, dans lequel les canaux (44) du réseau (42) de canaux directionnels sont agencés selon un motif en nid d'abeille.

6. Souffleur selon l'une quelconque des revendications précédentes dans lequel l'axe de réseau (50) est parallèle à l'axe d'admission (40).

7. Souffleur selon l'une quelconque des revendications précédentes dans lequel l'axe d'admission (40) forme avec l'axe de ventilateur (30) un angle compris entre 30 et 120 degrés d'angle.

8. Souffleur selon la revendication 7, dans lequel l'angle est compris entre 45 et 90 degrés d'angle.

9. Souffleur selon l'une quelconque des revendications précédentes, comprenant en outre des déflecteurs d'air (86) ménagés au voisinage de la bouche d'admission (34), en amont du réseau (42) de canaux directionnels.

10. Souffleur selon l'une quelconque des revendications précédentes dans lequel une distance entre l'axe d'admission (40) et le point médian d'équilibre (E) de la poignée (12) est supérieure à une distance entre l'axe de ventilateur (30) et le point médian d'équilibre (E) de la poignée.

11. Souffleur selon l'une quelconque des revendications précédentes dans lequel une distance entre l'axe de réseau (50) et le point médian d'équilibre (E) de la poignée (12) est supérieure à une distance entre l'axe de ventilateur (30) et le point médian (E) de la poignée.

12. Souffleur selon l'une quelconque des revendications précédentes, dans lequel les canaux présentent une longueur moyenne qui est supérieure ou égale à deux fois l'épaisseur minimum d'une paroi séparant des canaux adjacents.

13. Souffleur selon l'une quelconque des revendications précédentes, dans lequel la buse de soufflage (22) présente une bouche de soufflage (24) avec un axe de soufflage (31) formant un angle non nul avec l'axe de ventilateur (30), la bouche de soufflage étant tournée à l'écart du deuxième plan (P2).

14. Souffleur selon la revendication 13, dans lequel l'angle entre l'axe de soufflage (31) et l'axe de ventilateur (30) est compris entre 5 et 15 degrés d'angle.

15. Souffleur selon l'une quelconque des revendications précédentes, comprenant un moteur électrique d'entrainement du ventilateur, et une batterie (18) d'alimentation électrique du moteur, la batterie étant une batterie déportée.

## Patentansprüche

1. Tragbarer Bläser (10), umfassend:
- einen axialen Blaslüfter (16), der eine Lüfterachse (30) aufweist,
- einen Griff (12), der einen mittleren Ausgleichspunkt (E) aufweist,
- eine Blasdüse (22), die stromabwärts des axialen Lüfters verbunden ist,
- zumindest eine Saugdüse (32), die stromaufwärts des axialen Lüfters verbunden ist, wobei die Saugdüse eine Lufteinlassöffnung (34) mit einer Einlassachse (40) umfasst, die einen Winkel ungleich Null mit der Lüfterachse (30) bildet, wobei sich die Einlassöffnung stromaufwärts einer ersten Ebene (P1) senkrecht zur Lüfterachse (30) befindet und den mittleren Ausgleichspunkt (E) des Griffes umfasst, und wobei die Lufteinlassöffnung (34) ferner von einer zweiten Ebene (P2) abgewandt ist, die den mittleren Punkt des Griffes durchläuft, wobei die zweite Ebene senkrecht zu einer Geraden orthogonal zur Lüfterachse (30) ist und den mittleren Ausgleichspunkt (E) des Griffes durchläuft,
- ein Schutzgitter (36) der Lufteinlassöffnung,
- wobei die Lufteinlassdüse ein Netz (42) aus Richtkanälen (44) zur Homogenisierung eines Lufteinlassstroms umfasst, wobei das Netz aus Richtkanälen benachbart zu der Lufteinlassöffnung (34) vorgesehen ist,
- wobei das Netz aus Richtkanälen (42) eine Netzachse (50) aufweist und die Netzachse einen Schnittpunkt (60) mit der zweiten Ebene aufweist, wobei sich der Schnittpunkt stromaufwärts der ersten Ebene (P1) befindet, **dadurch gekennzeichnet, dass** das Netz aus Richtkanälen konfiguriert ist, um dem Lufteinlassstrom eine Richtungskomponente entgegengesetzt zu dem Lüfter zu verleihen,
- wobei das Netz aus Richtkanälen zumindest eine der folgenden Eigenschaften aufweist:
(I) die Netzachse (50) bildet mit der Einlassachse (40) einen Winkel mit einer divergierenden Komponente entgegengesetzt zu dem axialen Lüfter (16),
(II) die Kanäle (44) des Netzes aus Richtungskanälen weisen einen zunehmenden Querschnitt jeweils in Abhängigkeit von einem Abstand auf, der sie von dem axialen Lüfter (16) trennt,
(III) die Kanäle (44) des Netzes aus Richtkanälen weisen eine abnehmende Länge jeweils in Abhängigkeit von einem Abstand auf, der sie von dem axialen Lüfter (16) trennt.

2. Bläser nach Anspruch 1, wobei das Netz aus Richtkanälen (42) aus einem einzelnen Stück mit dem Schutzgitter (36) gebildet ist.

3. Bläser nach Anspruch 1, wobei das Netz aus Richtkanälen (42) benachbart zu dem Schutzgitter (36) gebildet ist.

4. Bläser nach Anspruch 1, wobei das Netz aus Richtkanälen (42) das Schutzgitter (36) darstellt.

5. Bläser nach einem der vorhergehenden Ansprüche, wobei die Kanäle (44) des Netzes (42) aus Richtkanälen gemäß einem Wabenmuster angeordnet sind.

6. Bläser nach einem der vorhergehenden Ansprüche, wobei die Netzachse (50) parallel zu der Einlassachse (40) ist.

7. Bläser nach einem der vorhergehenden Ansprüche, wobei die Einlassachse (40) mit der Lüfterachse (30) einen Winkel zwischen 30 und 120 Winkelgrad bildet.

8. Bläser nach Anspruch 7, wobei der Winkel zwischen 45 und 90 Winkelgrad beträgt.

9. Bläser nach einem der vorhergehenden Ansprüche, ferner umfassend Luftführungen (86), die benachbart zu der Einlassöffnung (34) stromaufwärts des Netzes (42) aus Richtkanälen vorgesehen sind.

10. Bläser nach einem der vorhergehenden Ansprüche, wobei ein Abstand zwischen der Einlassachse (40) und dem mittleren Ausgleichspunkt (E) des Griffes (12) größer als ein Abstand zwischen der Lüfterachse (30) und dem mittleren Ausgleichspunkt (E) des Griffes ist.

11. Bläser nach einem der vorhergehenden Ansprüche, wobei ein Abstand zwischen der Netzachse (50) und dem mittleren Ausgleichspunkt (E) des Griffes (12) größer als ein Abstand zwischen der Lüfterachse (30) und dem mittleren Ausgleichspunkt (E) des Griffes ist.

12. Bläser nach einem der vorhergehenden Ansprüche, wobei die Kanäle eine mittlere Länge aufweisen, die größer als das oder gleich dem Zweifache(n) der Mindestdicke einer Wand ist, die die benachbarten Kanäle trennt.

13. Bläser nach einem der vorhergehenden Ansprüche, wobei die Blasdüse (22) eine Blasöffnung (24) mit einer Blasachse (31) aufweist, die einen Winkel ungleich Null mit der Lüfterachse (30) bildet, wobei die Blasöffnung von der zweiten Ebene (P2) abgewandt ist.

14. Bläser nach Anspruch 13, wobei der Winkel zwischen der Blasachse (31) und der Lüfterachse (30) zwischen 5 und 15 Winkelgrad beträgt.

15. Bläser nach einem der vorhergehenden Ansprüche, umfassend einen Elektromotor mit Lüfterantrieb, und eine elektrische Batteriegruppe (18) des Motors, wobei die Batterie eine ausgelagerte Batterie ist.

## Claims

1. A portable blower (10) comprising:
- an axial blowing fan (16) having a fan axis (30),
- a handle (12) having a central equilibrium point (E),
- a blowing outlet nozzle (22) connected downstream of the axial fan,
- at least one suction intake nozzle (32) connected upstream of the axial fan, the suction intake nozzle comprising an air intake opening (34) with an intake axis (40) forming a non-zero angle with the fan axis (30), the intake opening being disposed upstream of a first plane (P1) perpendicular to the fan axis (30) and comprising the central equilibrium point (E) of the handle, and the air intake opening (34) also being directed away from a second plane (P2) passing through the central point of the handle, the second plane being perpendicular to a straight line in orthogonal relationship with the fan axis (30) and passing through the central equilibrium point (E) of the handle,
- a protective grid (36) for the air intake opening,
- the air intake nozzle comprising a network (42) of directional passages (44) for homogenisation of an intake air flow, the network of directional passages being disposed in the vicinity of the air intake opening (34),
- the network of directional passages (42) having a network axis (50) and the network axis has an intersection point (60) with the second plane, the intersection point being disposed upstream of the first plane (P1), **characterised in that** the network of directional passages is configured to impart to the intake air flow a directional component in opposite relationship to the fan, the network of directional passages having at least one of the following characteristics:
(I) the network axis (50) forms with the intake axis (40) an angle with a divergent component in opposite relationship to the axial fan (16),
(II) the passages (44) of the network of directional passages is of a section increasing respectively in dependence on a distance separating them from the axial fan (16), and
(III) the passages (44) of the network of directional passages are of a length decreasing respectively in dependence on a distance separating them from the axial fan (16).

2. A blower according to claim 1 wherein the network of directional passages (42) is formed in one piece with the protective grid (36).

3. A blower according to claim 1 wherein the network of directional passages (42) is formed in the vicinity of the protective grid (36).

4. A blower according to claim 1 wherein the network of directional passages (4) constitutes the protective grid (36).

5. A blower according to any one of the preceding claims wherein the passages (44) of the network (42) of directional passages are arranged in accordance with a honeycomb pattern.

6. A blower according to any one of the preceding claims wherein the network axis (50) Is parallel to the intake axis (40).

7. A blower according to any one of the preceding claims wherein the intake axis (40) forms an angle of between 30 and 120 degrees of angle with the fan axis (30).

8. A blower according to claim 7 wherein the angle is between 45 and 90 degrees of angle.

9. A blower according to any one of the preceding claims further comprising air deflectors (86) disposed in the vicinity of the intake opening (34), upstream of the network (42) of directional passages.

10. A blower according to any one of the preceding claims wherein a distance between the intake axis (40) and the central equilibrium point (E) of the handle (12) is greater than a distance between the fan axis (30) and the central equilibrium point (E) of the handle.

11. A blower according to any one of the preceding claims wherein a distance between the network axis (50) and the central equilibrium point (E) of the handle (12) is greater than a distance between the fan axis (30) and the central point (E) of the handle.

12. A blower according to any one of the preceding claims wherein the passages are of a mean length which is greater than or equal to twice the minimum thickness of a wall separating adjacent passages.

13. A blower according to any one of the preceding claims wherein the blowing outlet nozzle (22) has a blowing opening (24) with a blowing axis (31) forming a non-zero angle with the fan axis (30), the blowing opening being directed away from the second plane (P2).

14. A blower according to claim 13 wherein the angle between the blowing axis (31) and the fan axis (30) is between 5 and 15 degrees of angle.

15. A blower according to any one of the preceding claims comprising an electric motor for driving the fan and a battery (18) for the electrical power supply for the motor, the battery being a remote battery.
